# EUROPÄISCHE PATENTSCHRIFT

(11) **EP 0 737 712 B1**
(45) Veröffentlichungstag und Bekanntmachung des Hinweises auf die Patenterteilung: **21.07.1999**
(21) Anmeldenummer: 96105255.2
(22) Anmeldetag: 02.04.1996
(51) Int. Cl.: C08L 23/10, C08L 23/14

(54) **Polypropylen-Formmasse mit antistatischer Ausrüstung und niedrigem Fogging**
Polypropylene moulding composition with antistatic outfit and low fogging
Composition à base de polypropylène avec équipement antistatique et fogging bas

(30) Priorität: 13.04.1995 DE 19513986
(43) Veröffentlichungstag der Anmeldung: 16.10.1996
(73) Patentinhaber: TARGOR GmbH, 55116 Mainz (DE)
(72) Erfinder: Rohrmann, Jürgen, Dr., 65779 Kelkheim (DE)

(56) Entgegenhaltungen:
- EP-A- 0 492 463
- EP-A- 0 576 971
- DATABASE WPI Section Ch, Week 8520, Derwent Publications Ltd., London, GB; Class C08, AN 85-118773, XP002056844 & JP-A-60 058 444 (SHOWA DENKO KK)

## Beschreibung

Die Erfindung bezieht sich auf eine Polypropylenformmasse, die eine antistatische Ausrüstung trägt. Oberflächen von daraus hergestellten Formteilen weisen daher nur geringe Staubanziehungen auf und besitzen deswegen eine geringere Anfälligkeit gegen Verschmutzung. Gleichzeitig ist das Material emissionsarm und besitzt damit niedrige Foggingwerte. Die erfindungsgemäße Formmasse kann mittels der üblichen Verarbeitungsverfahren wie Spritzgießen, Extrudieren und Extrusionsblasformen verarbeitet werden.

Kfz-Innenverkleidungsteile wie Abdeckungen von A-, B-, C-Säulen, Armaturentafeln, Türverkleidungen, Sitzverkleidungen, Ablagen und Konsolen werden großtechnisch nach dem Spritzgießverfahren aus thermoplastischen Kunststoffen hergestellt. In diesem Anwendungssektor kommt aus Kostengründen hauptsächlich talkumverstärktes Polypropylen zum Einsatz. Da die Teile im Sichtbereich liegen, werden hohe Anforderungen an die optische Oberflächenqualität gelegt. Häufig treten allerdings aufgrund der niedrigen Oberflächenleitfähigkeit des Polypropylens und als Folge elektrostatischer Aufladung unerwünschte und störende Verschmutzungen der Oberflächen durch Staubablagerung auf. Dabei werden typische Staubfiguren (sogenannte Krähenfüße) sichtbar. Diese unerwünschten Krähenfüße können sowohl schon beim Herstellungsprozeß dieser Formteile als auch bei der späteren Montage oder dem bestimmungsgemäßen Gebrauch auftreten. Da die Verschmutzungen rein optisch den Eindruck von niederer Qualität erwecken und daher sehr unerwünscht sind, werden für den Kfz-Innenraum zunehmend antistatisch ausgerüstete Materialien verlangt, die diese Phänomene nicht zeigen.

Weiterhin werden für den Kfz-Innenraum in zunehmendem Maße emissionsarme Materialien verlangt, um im Automobilinnenraum ein angenehmes Raumklima zu schaffen und auch das innere Beschlagen der Scheiben mit ausdiffundierenden flüchtigen Bestandteilen wirksam zu unterbinden. Dieses Beschlagen der Scheiben wird mit Fogging bezeichnet. Somit werden verstärkt foggingarme Materialien für den Kfz-Innenraum benötigt, einige Kfz-Hersteller haben mittlerweile schon Obergrenzen für das Fogging von Innenraummaterialien festgelegt. Zur Messung des Foggingwertes gibt es prinzipiell zwei Methoden, eine reflektometrische und eine gravimetrische. Die gravimetrische Methode ist hierbei die zuverlässigere und hat sich mittlerweile durchgesetzt. Sie ist in der Vorschrift DIN 75201 beschrieben. Die maximal zulässige Obergrenze für das Fogging von Innenverkleidungsmaterialien gängiger deutscher Automobile liegt derzeit bei < 1 mg.

Werden Kunststoffteile, insbesondere solche aus Polypropylen antistatisch ausgerüstet, so geschieht dies in aller Regel durch den Zusatz spezieller Antistatika, die an die Oberfläche des Formteils wandern und dort mit Hilfe hydrophiler Gruppen einen Feuchtigkeitsfilm bilden. Für Polypropylen und talkumverstärktes Polypropylen werden zu diesem Zweck Glyzerinmonostearat, Glyzerindistearat und ethoxylierte Alkylamine eingesetzt (siehe: Modern plastics International, Nov. 1988,86-92). Durch die Feuchtigkeit wird die Oberflächenleitfähigkeit erhöht und eine elektrostatische Aufladung vermieden. Da die bekannten antistatischen Additive in relativ hohen Konzentrationen zudosiert werden müssen, um die gewünschte Wirkung zuverlässig zu gewährleisten, und da sie selbst relativ niedermolekular sind und darüber hinaus an der Oberfläche der Formteile sitzen, tragen sie extrem stark zum Fogging bei. Somit besitzen antistatisch ausgerüstete Formteile normalerweise immer vergleichsweise hohe Foggingwerte.

Für die vorliegende Erfindung bestand somit die Aufgabe, spezielle Antistatika für talkumverstärktes Polypropylen bereitzustellen, die einerseits den besonders hohen Anforderungen für den Kfz-Innenraum bezüglich Fogging gerecht werden und die andererseits Staubablagerungen infolge elektrostatischer Kräfte wirksam unterbinden.

Überraschenderweise wurde nun gefunden, daß diese Aufgabe erfindungsgemäß durch eine Spritzgußmasse auf Basis eines talkumverstärkten Propylenpolymeren enthaltend eine Additivkombination aus Glyzerinmonostearat plus Fettsäuredialkanolamid in einem Mischungsverhältnis im Bereich von 1:1 bis 3:1 und einer Gesamtmenge von bis zu 1,5 Gew.-%, bezogen auf das Gewicht des Propylenpolymeren, gelöst wird.

Unter einem talkumverstärkten Propylenpolymeren ist im Rahmen der vorliegenden Erfindung ein Propylenhomo- oder ein -blockcopolymerisat mit bis zu 17 Gew.-% Ethylenanteilen und einem Gehalt von bis zu 40 Gew.-% Talkum, bezogen auf das Gewicht des Propylenpolymeren, zu verstehen. Es können aber auch statistische Copolymerisate oder Pfropfcopolymere mit Propylenbausteinen als Hauptbestandteil oder Mischungen von Polypropylen mit anderen damit verträglichen Polymeren wie kautschukartigen Mischpolymerisaten eingesetzt werden. Der Zusatz an Talkum soll vorzugsweise im Bereich von 10 bis 30 Gew.-% liegen.

Als Fettsäuredialkanolamide sollen im Rahmen der vorliegenden Erfindung vorzugsweise Laurinsäurediethanolamid oder Ölsäurediethanolamid eingesetzt werden, wobei die bevorzugte Gesamtmenge der Additivkombination aus Glycerinmonostearat plus Fettsäuredialkanolamid im Bereich von 0,6 bis 1,2 Gew.-% liegt, bezogen auf das Gewicht an Propylenpolymer.

Die erfindungsgemäße Spritzgußmasse erwies sich in zahlreichen Versuchen als wirksamer gegenüber elektrostatische Aufladung im Vergleich mit den aus der Literatur bekannten Mischungen aus Glyzerinmonostearat und ethoxylierten Alkylaminen und ergaben überraschenderweise darüber hinaus niedrigere Foggingwerte.

Die nachfolgenden Ausführungsbeispiele sollen die Erfindung für den Fachmann noch deutlicher offenbaren. Dabei wurden zur Untersuchung des Einflußes verschiedener Antistatika auf die Reduzierung der elektrostatischen Aufladung und des Foggingverhaltenens talkumverstärkte PP-Compounds mit einem PP-Copolymer mit unterschiedlichen Konzentrationen an verschiedenen Antistatika hergestellt. Es wurden hierbei Glyzerinmonostearat, Gemische aus Glyzerinmonostearat und Glyzerindistearat, ethoxylierte Alkylamine mit unterschiedlichen Kettenlängen und Laurinsäurediethanolamid in jeweils unterschiedlichen Konzentrationen und Mischungsverhältnissen eingesetzt. Der Anteil an Talkum, die chemische Zusammensetzung der Copolymeren, der Schlagzähmodifier und die übrigen Additive wie Verarbeitungsstabilisatoren, Antioxidantien, Lichtschutzmittel und Verarbeitungshilfsmittel wurden nicht variiert.

Zur Untersuchung der elektrostatischen Aufladung und der Verschmutzung wurden von den Compounds unter konstanten Bedingungen Stapelkästen gespritzt, mit Saughebern entformt und diese an einem relativ staubigen Ort gelagert und den dort herrschenden Umweltbedingungen ausgesetzt. Diese Bedingungen sind sehr praxisgerecht und simulieren einen Produktionsprozeß zur Herstellung eines Spritzgußteils z. B. für Kfz-Anwendungen. Bei Teilen ohne antistatische Ausrüstung treten nach wenigen Stunden, spätestens aber nach einigen Tagen, an der Oberfläche des Formteils die typischen Staubfiguren auf. In aller Regel treten diese zuerst an der Stelle der Saugheberansatzes auf, da hier die größte Ladungstrennung erfolgt. Vergleichend hierzu wurde auch der spezifische Oberflächenwiderstand der Formteile unter konstanten Bedingungen gemessen (nach DIN IEC 93; VDE 0303 Teil 30, an 1 mm Platten 8x8 cm, spez. Oberflächenwiderstand = Oberflächenwiderstand x 10).

Zur Untersuchung des Foggingverhaltens wurden unter reinen Bedingungen 3 mm Platten abgespritzt und anschließend nach DIN 75201 bei einer Temperatur von 100°C über einen Zeitraum von 16 h gravimetrisch der Foggingwert bestimmt. Es wurde hierbei jeweils ein Mittelwert aus 4 Messwerten ermittelt, die in zwei Durchgängen gemessen wurden. Die im Rahmen der Beispiel ausgewiesenen Prozentangaben sind jeweils als Gew.-% zu verstehen.

Aus Tabelle 1 wird ersichtlich, daß bei talkumverstärktem PP mit einem Antistatikum alleine erst bei vergleichsweise hohen Konzentrationen ein wirksamer antistatischer Effekt eintritt (Compound 5 und 12). Die Foggingwerte liegen hierbei jedoch schon sehr hoch (anzustreben sind Foggingwerte ≤ 1 mg). Mit Mischungen aus Glyzerinmonostearat und ethoxylierten Aminen treten bei niedrigeren Gesamtkonzentrationen schon antistatische Effekte auf (Compound 7 und 9). Die Foggingwerte liegen hierbei jedoch ebenfalls sehr hoch.

Überraschenderweise tritt bei Mischungen von Glyzerinmonostearat mit Laurinsäurediethanolamid in einem bestimmten Konzentrationsverhältnis ein sehr wirksamer antistatischer Effekt mit sehr geringer Verschmutzungsneigung bei gleichzeitig niedrigem Foggingwert ein (Compound 11). Somit liegt hier ein unerwarteter synergistischer Effekt vor. Dies wird besonders deutlich beim Vergleich von Compound 11 mit den Compounds 4 und 12 in denen die Antistatika jeweils allein in der gleichen Gesamtkonzentration von 0,7 % eingesetzt wurden. Auch beim Vergleich mit Compunds 7 und 9 wird deutlich, daß Laurinsäurediethanolamid überraschenderweise in bezug auf einen antistatischen Effekt und das Foggingverhalten ein besserer Synergist darstellt als die nach dem Stand der Technik eingesetzten ethoxylierten Alkylamine.

Der Vorteil der erfindungsgemäßen Additivkombination liegt somit darin, daß bei geringen Einsatzkonzentrationen eine antistatische Wirksamkeit mit geringer elektrostatischer Aufladung erzielt werden kann und somit langfristig eine geringe Verschmutzungsneigung gewährleistet wird. Das unerwünschte Foggingverhalten wird dabei gleichzeitig stark reduziert. Durch die höhere Wirksamkeit können bei der Fertigung auch Rezepturkosten eingespart werden.

Die erfindungsgemäßen Spritzgußmassen können vorteilhaft für Kfz-Innenverkleidungsteile wie Abdeckungen von A-, B-, C-Säulen, Armaturentafeln, Türverkleidungen, Sitzverkleidungen, Ablagen und Konsolen, genausogut aber auch für Haushaltsgeräte wie Toastergehäuse, Kaffemaschinen, Bügeleisen, Elektroinstallationsteile oder Büromöbelformteile verwendet werden.

Die erfindungsgemäßen Formmassen können unter Anwendung der normalen Verarbeitungsbedingungen für Polypropylen und verstärktes Polypropylen verarbeitet werden. Die Verarbeitungstemperaturen liegen je nach Größe und Geometrie des Formteils im Bereich von 240 bis 280°C. Die Werkzeugtemperatur beträgt im allgemeinen 30 bis 70C.

### Beispiel 1 (Vergleichsbeispiel)

Auf einem Zweischneckenextruder wurde eine Mischung aus 75 Gewichtsteilen (GT) eines Propylenblockcopolymers (7% Ethylengehalt, MFI 230/2,16 von 7,0 g/10min), 5 GT eines EPM-Kautschuks (52% Propylen, 48% Ethylen, Mooney-Viskosität ML (1 + 4) 125C von 80), 20 GT Talkum mit einer Korngrößenverteilung von 99% 20 und 55% 5 µm, 0,2 GT Pentaerythril-tetrakis[3-(3,5-di-tert.butyl-4-hydroxyphenyl)-propionat], 0,2 GT Tris(2,4-di-tert.butylphenyl)phosphit, 0,2 GT Magnesiumoxid, 0,2 GT eines sterisch gehinderten Amins und 0,5 GT eines teilverseiften Esterwachses bei einer Massetemperatur im Bereich von 230 bis 240°C extrudiert. Die Mischung hatte einen MFI 230/2,16 von 7,5 cm/10 min und einen Glührückstand bei 625°C von 19,5%. Der Zug-E-Modul (ISO 527) betrug 2050 MPa und die Kerbschlagzähigkeit nach Charpy (ISO 179) betrug 10,4 kJ/m². Weitere Daten siehe Tabelle 1.

### Beispiel 2 (Vergleichsbeispiel)

Auf einem Zweischneckenextruder wurde analog Beispiel 1 eine Mischung hergestellt, mit dem einzigen Unterschied, daß zusätzlich 0,7 GT Glyzerinmonostearat (Reinheitsgrad 55%, Rest Glyzerindi- und -tristearate) zugegeben wurden. Die Ergebnisse sind in Tabelle 1 aufgeführt.

### Beispiel 3 (Vergleichsbeispiel)

Wie in Beispiel 1 wurde eine Mischung hergestellt. Zusätzlich wurde jedoch eine Menge von 0,5 GT Glyzerinmonostearat (Reinheitsgrad 95%, Fp. 69°C) zugegeben. Die Ergebnisse sind in Tabelle 1 aufgeführt.

### Beispiel 4 (Vergleichsbeispiel)

Wie in Beispiel 1 wurde eine Mischung hergestellt. Zusätzlich wurden 0,7 GT Glyzerinmonostearat (Reinheitsgrad 95%, Fp. 69°C) zugegeben. Die Ergebnisse sind in Tabelle 1 aufgeführt.

### Beispiel 5 (Vergleichsbeispiel)

Wie in Beispiel 1 wurde eine Mischung hergestellt. Zusätzlich wurden 1,0 GT Glyzerinmonostearat (Reinheitsgrad 95%, Fp. 69°C) zugegeben. Die Ergebnisse sind in Tabelle 1 aufgeführt.

### Beispiel 6 (Vergleichsbeispiel)

Wie in Beispiel 1 wurde eine Mischung hergestellt. Zusätzlich wurden 0,3 GT Glyzerinmonostearat (Reinheitsgrad 95%, Fp. 69°C) und 0,15 GT Alkyldiethanolamin zugegeben (mittlere Kettenlänge: 15 C-Atome, Erstarrungspunkt: +2 °C). Die Ergebnisse sind in Tabelle 1 aufgeführt.

### Beispiel 7 (Vergleichsbeispiel)

Wie in Beispiel 1 wurde eine Mischung hergestellt. Zusätzlich wurden 0,5 GT Glyzerinmonostearat (Reinheitsgrad 95%, Fp. 69°C) und 0,2 GT Alkyldiethanolamin zugegeben (mittlere Kettenlänge: 15 C-Atome, Erstarrungspunkt: +2 °C). Die Ergebnisse sind in Tabelle 1 aufgeführt.

### Beispiel 8 (Vergleichsbeispiel)

Wie in Beispiel 1 wurde eine Mischung hergestellt. Zusätzlich wurden 0,3 GT Glyzerinmonostearat (Reinheitsgrad 95%, Fp. 69°C) und 0,15 GT Alkyldiethanolamin zugegeben (mittlere Kettenlänge: 18 C-Atome, Erstarrungspunkt: +60 °C). Die Ergebnisse sind in Tabelle 1 aufgeführt.

### Beispiel 9 (Vergleichsbeispiel)

Wie in Beispiel 1 wurde eine Mischung hergestellt. Zusätzlich wurden 0,5 GT Glyzerinmonostearat (Reinheitsgrad 95%, Fp. 69°C) und 0,2 GT Alkyldiethanolamin zugegeben (mittlere Kettenlänge: 18 C-Atome, Erstarrungspunkt: +60 °C). Die Ergebnisse sind in Tabelle 1 aufgeführt.

### Beispiel 10 (erfindungsgemäß)

Wie in Beispiel 1 wurde eine Mischung hergestellt. Zusätzlich wurden 0,3 GT Glyzerinmonostearat (Reinheitsgrad 95%, Fp. 69°C) und 0,15 GT Laurinsäurediethanolamid (Schmelzpunkt: ca. 45 °C) zugegeben. Die Ergebnisse sind in Tabelle 1 aufgeführt.

### Beispiel 11 (erfindungsgemäß)

Wie in Beispiel 1 wurde eine Mischung hergestellt. Zusätzlich wurden 0,5 GT Glyzerinmonostearat (Reinheitsgrad 95%, Fp. 69°C) und 0,2 GT Laurinsäurediethanolamid (Schmelzpunkt: ca. 45 °C) zugegeben. Die Ergebnisse sind in Tabelle 1 aufgeführt.

### Beispiel 12 (Vergleichsbeispiel)

Wie in Beispiel 1 wurde eine Mischung hergestellt. Zusätzlich wurden 0,7 GT Laurinsäurediethanolamid (Schmelzpunkt: ca. 45 °C) zugegeben. Die Ergebnisse sind in Tabelle 1 aufgeführt.

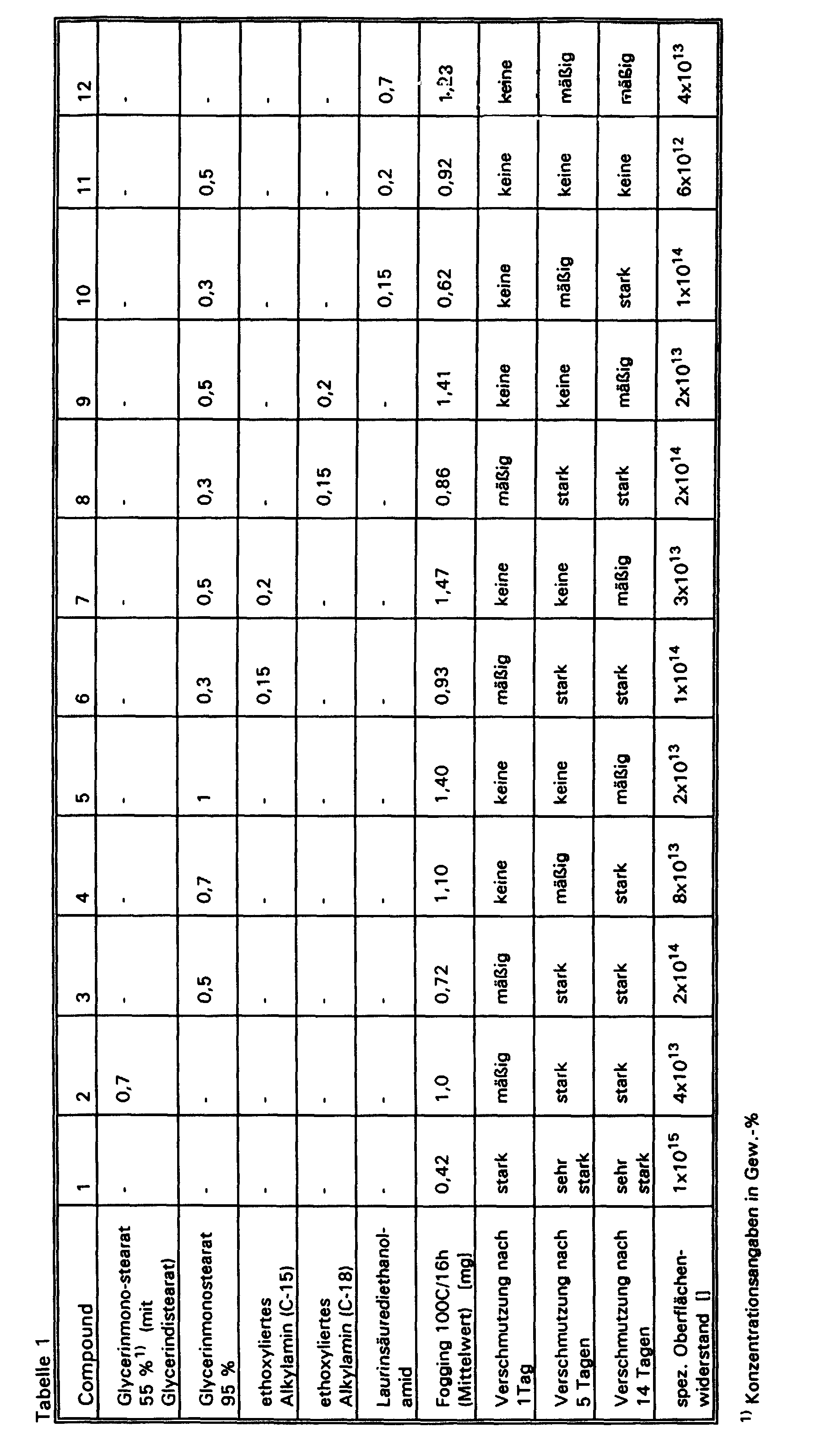

## Patentansprüche

1. Spritzgußformmasse auf Basis eines talkumverstärkten Propylenpolymeren enthaltend eine Additivkombination aus Glyzerinmonostearat plus Fettsäuredialkanolamid in einem Mischungsverhältnis im Bereich von 1:1 bis 3:1 und einer Gesamtmenge von bis zu 1,5 Gew.-%, bezogen auf das Gewicht des Propylenpolymeren.

2. Spritzgußformmasse nach Anspruch 1, dadurch gekennzeichnet, daß das Propylenpolymere ein Propylenhomo- oder ein -blockcopolymerisat mit bis zu 17 Gew.-% Ethylenanteilen und einem Gehalt von bis zu 40 Gew.-% Talkum, bezogen auf das Gewicht des Propylenpolymeren, ist oder ein statistisches Copolymer oder Pfropfcopolymer mit Propylenbausteinen als Hauptbestandteil oder eine Mischung von Polypropylen mit anderen damit verträglichen Polymeren wie kautschukartigen Mischpolymerisaten.

3. Spritzgußformmasse nach Anspruch 2, dadurch gekennzeichnet, daß das Propylencopolymere ein Blockcopolymer mit bis zu 17 Gew.-% Ethyleneinheiten ist.

4. Spritzgußformmasse nach Anspruch 2, dadurch gekennzeichnet, daß der Zusatz an Talkum im Bereich von 10 bis 30 Gew.-%, bezogen auf das Gewicht des Propylenpolymeren, liegt.

5. Spritzgußformmasse nach einem der Ansprüche 1 bis 4, dadurch gekennzeichnet, daß sie als Fettsäuredialkanolamid Laurinsäurediethanolamid oder Ölsäurediethanolamid enthält.

6. Spritzgußformmasse nach einem der Ansprüche 1 bis 5, dadurch gekennzeichnet, daß die Gesamtmenge der Additivkombination aus Glycerinmonostearat plusFettsäuredialkanolamid im Bereich von 0,6 bis 1,2 Gew.-% liegt, bezogen auf das Gewicht an Propylenpolymer.

7. Verwendung einer Spritzgußmasse nach einem der Ansprüche 1 bis 6 zur Herstellung von Formteilen für die Kfz-Innenverkleidung wie Abdeckungen von A-, B-, C-Säulen, Armaturentafeln, Türverkleidungen, Sitzverkleidungen, Ablagen oder Konsolen.

8. Verwendung einer Spritzgußformmasse nach einem der Ansprüche 1 bis 6 zur Herstellung von Haushaltsgeräten wie Toastergehäusen, Kaffemaschinen, Bügeleisen, Elektroinstallationsteilen oder Büromöbelformteilen.

## Claims

1. An injection-molding composition based on a talc-reinforced propylene polymer containing an additive combination of glyceryl monostearate plus fatty acid dialkanolamide in a mixing ratio in the range from 1:1 to 3:1 and a total amount of up to 1.5 % by weight, based on the weight of the propylene polymer.

2. An injection-molding composition as claimed in claim 1, wherein the propylene polymer is a propylene homopolymer or block copolymer comprising up to 17 % by weight of ethylene units and having a talc content of up to 40 % by weight, based on the weight of the propylene polymer, or a random copolymer or graft copolymer comprising propylene building blocks as main constituent or a mixture of polypropylene with other polymers compatible therewith, such as rubber-like copolymers.

3. An injection-molding composition as claimed in claim 2, wherein the propylene copolymer is a block copolymer comprising up to 17 % by weight of ethylene units.

4. An injection-molding composition as claimed in claim 2, wherein the addition of talc is in the range from 10 to 30% by weight, based on the weight of the propylene polymer.

5. An injection-molding composition as claimed in any of claims 1 to 4, containing lauric diethanolamide or oleic diethanolamide as fatty acid dialkanolamide.

6. An injection-molding composition as claimed in any of claims 1 to 5, wherein the total amount of the additive combination of glyceryl monostearate plus fatty acid dialkanolamide is in the range from 0.6 to 1.2 % by weight, based on the weight of propylene polymer.

7. Use of an injection-molding composition as claimed in any of claims 1 to 6 for producing moldings for motor vehicle interior trim such as coverings of A, B, C columns, dashboards, door linings, seat coverings, glove compartments or consoles.

8. Use of an injection-molding composition as claimed in any of claims 1 to 6 for producing household goods such as toaster housings, coffee machines, irons, electrical installation components or moldings for office furniture.

## Revendications

1. Masse de moulage à couler par injection à base d'un polymère de propylène renforcé par du talc, contenant une combinaison d'additifs à base de monostéarate de glycérine plus du dialcanolamide d'acide gras, dans un rapport de mélange de l'ordre de 1/1 à 3/1 et en une quantité globale allant jusqu'à 1,5% en poids, par rapport au poids du polymère de propylène.

2. Masse de moulage à couler par injection suivant la revendication 1, caractérisée en ce que le polymère de propylène est un homopolymère de propylène ou un copolymère bloc de propylène avec jusqu'à 17% en poids de fractions d'éthylène et une teneur allant jusqu'à 40% en poids de talc, par rapport au poids du polymère de propylène, ou un copolymère statistique ou un copolymère de greffage avec des éléments constitutifs de propylène, comme élément principal, ou un mélange de polypropylène avec d'autres polymères compatibles avec lui, comme des copolymères de type caoutchouc.

3. Masse de moulage à couler par injection suivant la revendication 2, caractérisée en ce que le copolymère de propylène est un copolymère bloc comportant jusqu'à 17% en poids d'unités d'éthylène.

4. Masse de moulage à couler par injection suivant la revendication 2, caractérisée en ce que l'addition de talc est de l'ordre de 10 à 30% en poids, par rapport au poids du polymère de propylène.

5. Masse de moulage à couler par injection suivant l'une des revendications 1 à 4, caractérisée en ce qu'elle contient, comme dialcanolamide d'acide gras, du diéthanolamide d'acide laurique ou du diéthanolamide d'acide oléique.

6. Masse de moulage à couler par injection suivant l'une des revendications 1 à 5, caractérisée en ce que la quantité totale de la combinaison d'additifs à base de monostéarate de glycérine plus du dialcanolamide d'acide gras est de l'ordre de 0,6 à 1,2% en poids, par rapport au poids de polymère de propylène.

7. Utilisation d'une masse de coulage par injection suivant l'une des revendications 1 à 6, pour la préparation de pièces moulées pour le revêtement interne de véhicules automobiles, comme des recouvrements de colonnes A, B, C, des tableaux de bord, des revêtements de porte, des revêtements de siège, des vide-poches ou des tablettes.

8. Utilisation d'une masse de moulage à couler par injection suivant l'une des revendications 1 à 6, pour la fabrication d'appareils ménagers, comme des boîtiers de grille-pain, des machines à café, des fers à repasser, des pièces d'installation électrique ou des pièces moulées de meubles de bureaux.
